(19) Europäisches Patentamt

European Patent Office

Office européen des brevets

(11) **EP 2 618 541 B1**

(12) **EUROPEAN PATENT SPECIFICATION**

(45) Date of publication and mention
of the grant of the patent:
**09.04.2014  Bulletin 2014/15**

(51) Int Cl.:
*H04L 29/08* ^(2006.01)      *H04L 12/819* ^(2013.01)

(21) Application number: **12151916.9**

(22) Date of filing: **20.01.2012**

(54) **A communication device for throttling transmitted data**

Kommunikationsvorrichtung zum Drosseln übermittelter Daten

Dispositif de communication pour accélérer les données transmises

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**24.07.2013  Bulletin 2013/30**

(73) Proprietor: **BlackBerry Limited
Waterloo, ON N2K 0A7 (CA)**

(72) Inventors:
• **Midani, Wael
   Waterloo, Ontario N2L 3W8 (CA)**
• **Zou, Ling
   Waterloo, Ontario N2L 3W8 (CA)**
• **Villaflor, Marcel
   Katonah, NY New York 10536 (US)**

(74) Representative: **MERH-IP
Matias Erny Reichl Hoffmann
Paul-Heyse-Strasse 29
80336 München (DE)**

(56) References cited:
**US-A1- 2008 025 214     US-A1- 2011 083 175**

## Description

## FIELD

The specification relates generally to communication devices, and specifically to a communication device for throttling transmitted data and a method therefor.

## BACKGROUND

The evolution of computers is currently quite active in the mobile device environment. It is known to use token buckets to throttle data transmitted from mobile devices. More recently, there has been a veritable explosion of the number and type of applications that are configured to the unique form factors and computing environments of mobile devices.

US 2008/025214 discloses a multilevel coupled policer configured to police packets using at least two policing levels, including a first-level of class policers and a second-level aggregate policer. The multilevel coupled policer is configured to share bandwidth of the aggregate policer among packet traffic corresponding to the class policers based on the packet traffic. The multilevel coupled policer is configured to apply the second-level aggregate policer to the particular packet based on an identified the tentative policing action and a result of a comparison operation of the number of tokens in one or more token buckets associated with the second-level aggregate policer and the length of the particular packet in order to determine a final policing action for marking and/or applying to the particular packet.

US 2011/083175 discloses methods and apparatus for policing and prioritizing of data services. Each packet in a data stream is directed to a substream policer of a plurality of substream policers. Each packet is allowed through the sub stream policer based on rate parameters associated with the substream policer. The packets allowed by the sub stream policer are directed to an aggregate policer. Each packet allowed through the sub stream policer is allowed through the aggregate policer based on rate parameters associated with the aggregate policer. The substream policer and the aggregate policer are charged for each packet allowed by both the substream policer and the aggregate policer. The sub stream policer and the aggregate policer are not charged for each packet not allowed by either the substream policer or the aggregate police.

## SUMMARY

An aspect of the specification provides a communication device comprising: a processor, and a communication interface, the processor enabled to: distribute token parameters of an aggregate token bucket, associated with a communication application, to respective application token buckets associated with at least two further applications, the communication application enabled to receive respective data from the at least two further applications for transmission to a network via the communication interface; determine respective weights, associated with each of the respective application token buckets, from respective data rates associated with each of the at least two further applications, such that the token parameters associated with the aggregate token bucket are distributed to each of the respective application token buckets according to the respective weights; throttle the respective data received from the at least two further applications via the respective application token buckets; and, redistribute the distributed token parameters among the respective application token buckets associated with active applications when at least one of: one or more of the at least two further applications becomes inactive; and one or more additional further applications become active. The token parameters can comprise: a maximum token bucket size for controlling bursts of the data; and a refresh rate, wherein respective maximum token buckets sizes and respective refresh rates are determined for each of the respective application token buckets such that a respective maximum token bucket size sum is approximately the maximum token bucket size, and a respective refresh rate sum is approximately the refresh rate.

The token bucket parameters can be scaled periodically according to scaling data received from a remote computing device. The scaling data can comprise time of day network usage probabilities. The scaling data can be based on historical network usage. The scaling data can be one of: for a plurality of communication devices, including the communication device, such that transmitted data is similarly scaled for each of the plurality of devices; and, specific to the communication device such that transmission of the data at the communication device is scaled independent of the other of the plurality of devices,

At least one set of respective token parameters can be associated with a respective application token bucket adjusted according to respective scaling parameters received from a remote computing device.

Another aspect of the specification provides a method comprising: distributing, at a processor of a computing device, token parameters of an aggregate token bucket, associated with a communication application, to respective application token buckets associated with at least two further applications, the communication application enabled to receive respective data from the at least two further applications for transmission to a network via a communication interface; determining, at the processor, respective weights associated with each of the respective application token buckets from respective data rates associated with each of the at least two further applications, such that the token parameters associated with the aggregate token bucket are distributed to each of the respective application token buckets according to the respective weights; throttling, at the processor, the respective data received from the at least two further applications via the respective application token buckets; and, redistributing, at the processor, the distributed token parameters among the respective application token buckets associated with active applications when at least one of: one or more of the at least two further applications becomes inactive; and one or more additional further applications become active.

The token parameters can comprise: a maximum token bucket size for controlling bursts of the data; and a refresh rate, wherein respective maximum token buckets sizes and respective refresh rates are determined for each of the respective application token buckets such that a respective maximum token bucket size sum is approximately the maximum token bucket size, and a respective refresh rate sum is approximately the refresh rate.

The token bucket parameters can be scaled periodically according to scaling data received from a remote computing device.

The scaling data can comprise time of day network usage probabilities.

The scaling data can be based on historical network usage.

The scaling data can be one of: for a plurality of communication devices, including the communication device, such that transmitted data is similarly scaled for each of the plurality of devices; and, specific to the communication device such that transmission of the data at the communication device is scaled independent of the other of the plurality of devices.

At least one set of respective token parameters can be associated with a respective application token bucket adjusted according to respective scaling parameters received from a remote computing device.

Yet a further aspect of the specification provides a computer program product, comprising a computer usable medium having a computer readable program code adapted to be executed to implement a method comprising: distributing, at a processor of a computing device, token parameters of an aggregate token bucket, associated with a communication application, to respective application token buckets associated with at least two further applications, the communication application enabled to receive respective data from the at least two further applications for transmission to a network via a communication interface of the computing device; determining, at the processor, respective weights associated with each of the respective application token buckets from respective data rates associated with each of the at least two further applications, such that the token parameters associated with the aggregate token bucket are distributed to each of the respective application token buckets according to the respective weights; throttling, at the processor, the respective data received from the at least two further applications via the respective application token buckets; and, redistributing, at the processor, the distributed token parameters among the respective application token buckets associated with active applications when at least one of: one or more of the at least two further applications becomes inactive; and one or more additional further applications become active.

## BRIEF DESCRIPTIONS OF THE DRAWINGS

For a better understanding of the various implementations described herein and to show more clearly how they may be carried into effect, reference will now be made, by way of example only, to the accompanying drawings in which:

Fig. 1 depicts a system for throttling transmitted data at a communication device, according to non-limiting implementations.
Fig. 2 depicts a communication device for throttling transmitted data, according to non-limiting implementations.
Fig. 3 depicts applications and token buckets of the communication device of Fig. 2, according to non-limiting implementations.
Fig. 4 depicts a method for throttling transmitted data at a communication device, according to non-limiting implementations.
Fig. 5 depicts distribution of token parameters among the token buckets of the communication device of Fig. 2, according to non-limiting implementations.
Fig. 6 depicts the communication device of Fig. 2 determining token bucket parameter distribution, according to non-limiting implementations.
Fig. 7 depicts a system for throttling transmitted data at a communication device, according to non-limiting implementations.
Fig. 8 depicts a communication device for throttling transmitted data, according to non-limiting implementations.
Fig. 9 depicts a graph of network load over a given time period, according to non-limiting implementations.
Fig. 10 depicts a table of scaling factors, according to non-limiting implementations.
Fig. 11 depicts a method f determining time of day (TOD) distribution/scaling factors, according to non-limiting implementations.
Fig. 12 depicts a system for throttling transmitted data at a communication device, according to non-limiting implementations.
Fig. 13 depicts a communication device for throttling transmitted data, according to non-limiting implementations.

## DETAILED DESCRIPTION

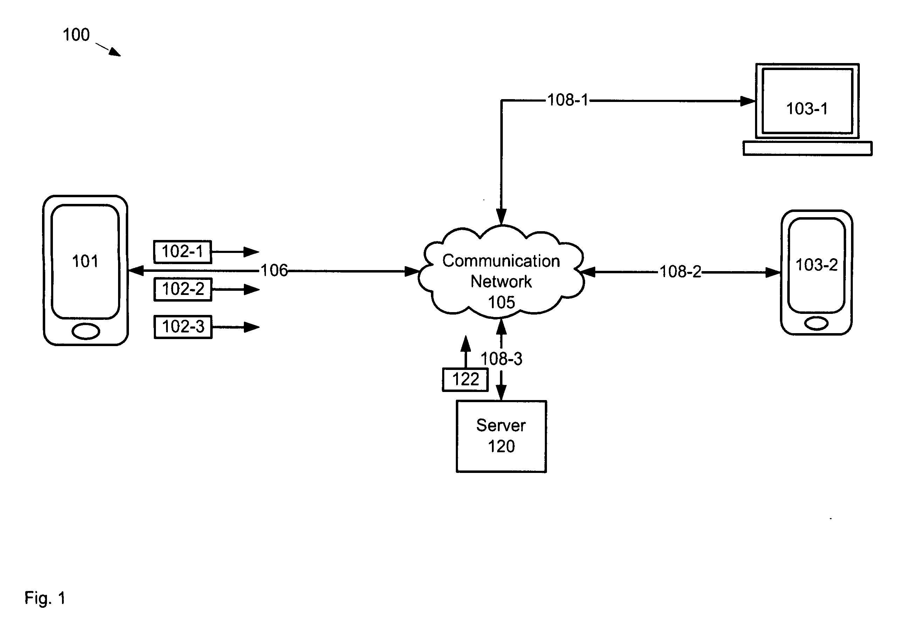

Fig. 1 depicts a system 100 comprising a communication device 101 enabled to transmit data 102-1, 102-2, 102-3 with one or more of a plurality of remote communication devices 103-1, 103-2 via a communication network 105 (also referred to hereafter as network 105), according to non-limiting implementations. Communication device 101 will be also referred to hereafter as device 101, and plurality of remote communication devices 103-1, 103-2 will also be referred to hereafter generically as a device 103, and collectively as devices 103. This convention will be used elsewhere in the present specification. Each of device 101 and device 103 are linked to communication network 105 via a respective link 106, 108-1, 108-2. It is appreciated that, in some implementations, the bandwidth of network 105 and/or link 106 (and/or links 108) can be limited. In other implementations, device 101 can be authorized to use only a given amount of bandwidth. In any event, it is appreciated that, in present implementations, data 102 is to be throttled, as will be explained below. System 100 further comprises a server 120 for providing token parameters 122 to device 101 linked to communication network 105 via link 108-3.

Device 101 can be any type of electronic device that can be used in a self-contained manner and to interact with network 105 via link 106. Interaction includes displaying of information at device 101 as well as to receive input at device 101 that can in turn be sent one or more of devices 103 via link 106.

It is hence appreciated that device 101 comprises any suitable communication device for communicating with network 105, including but not limited to any suitable combination of computing devices, personal computers, laptop computers, portable electronic devices, mobile computing device, portable computing devices, tablet computing devices, laptop computing devices, PDAs (personal digital assistants), cellphones, smartphones and the like. Other suitable communication devices are within the scope of present implementations.

Each device 103 can be similar to or different from device 101 and can include but are limited to any suitable combination of computing devices, personal computers, laptop computers, portable electronic devices, mobile computing device, portable computing devices, tablet computing devices, laptop computing devices, PDAs (personal digital assistants), cellphones, smartphones and the like. Other suitable communication devices are within the scope of present implementations. Further, while two devices 103 are depicted in Fig. 1, it is appreciated that system 100 can comprise any suitable number of devices 103, which can be more or less than two.

Each link 106, 108 comprises any suitable link with network 105, including any suitable combination of wired and/or wireless links, wired and/or wireless devices and/or wired and/or wireless networks, including but not limited to any suitable combination of USB (universal serial bus) cables, serial cables, wireless links, cell-phone links, cellular network links (including but not limited to 2G, 2,5G, 3G, 4G+, and the like) wireless data, Bluetooth links, NFC (near field communication) links, WiFi links, WiMax links, packet based links, the Internet, analog networks, the PSTN (public switched telephone network), access points, and the like, and/or a combination.

Network 105 can comprise any suitable combination of wired and/or wireless networks as desired, including but not limited to the Internet, the PSTN (public switched telephone network), analog networks, packet switched networks, WiFi networks, WiMax networks, and the like.

Server 120 can be based on any well-known server environment including a module that houses one or more central processing units, volatile memory (e.g. random access memory), persistent memory (e.g. hard disk devices) and network interfaces to allow server 120 to communicate over link 108-2. For example, server 120 can be a Sun Fire V480 running a UNIX operating system, from Sun Microsystems, Inc. of Palo Alto Calif., and having four central processing units each operating at about nine-hundred megahertz and having about sixteen gigabytes of random access memory. However, it is to be emphasized that this particular server is merely exemplary, and a vast array of other types of computing environments for servers 120, 130 are contemplated. It is furthermore appreciated that server 120 can comprise any suitable number of servers that can perform different functionality of server implementations described herein. Functionality of server 120 will be described in further detail below.

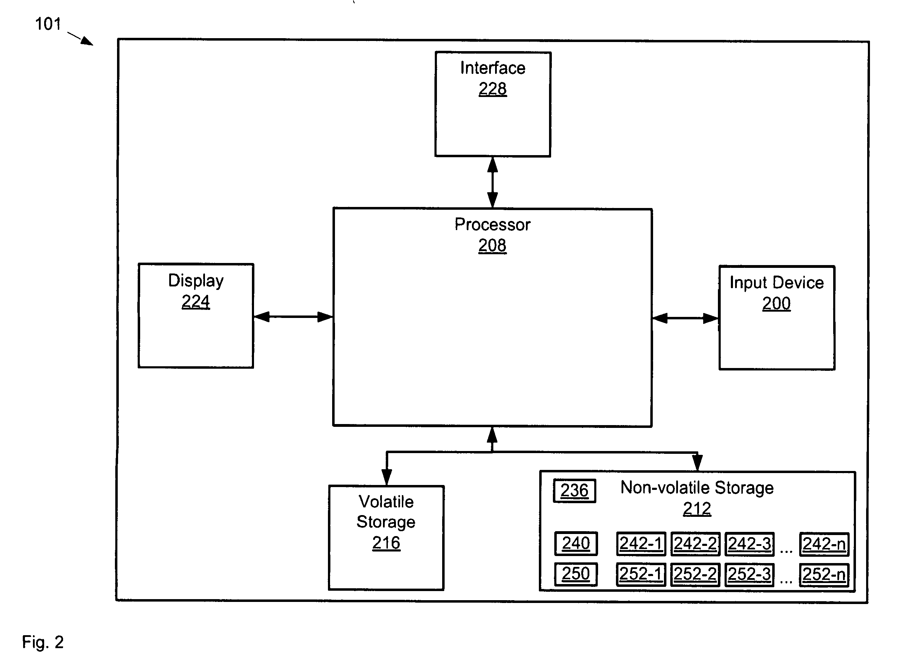

Attention is directed to Fig. 2, which depicts a schematic diagram of device 101 according to non-limiting implementations. It should be emphasized that the structure in Figure 2 is purely exemplary, and contemplates a device that can be used for both wireless voice (e.g. telephony) and wireless data (e.g. email, web browsing, text) communications. Device 101 comprises at least one input device 200 generally enabled to receive input data, and can comprise any suitable combination of input devices, including but not limited to a keyboard, a keypad, a pointing device, a mouse, a track wheel, a trackball, a touchpad, a touch screen and the like. Other suitable input devices are within the scope of present implementations.

Input from input device 200 is received at processor 208 (which can be implemented as a plurality of processors). Processor 208 is configured to communicate with a non-volatile storage unit 212 (e.g. Erasable Electronic Programmable Read Only Memory ("EEPROM"), Flash Memory) and a volatile storage unit 216 (e.g. random access memory ("RAM")). Programming instructions that implement the functional teachings of device 101 as described herein are typically maintained, persistently, in non-volatile storage unit 212 and used by processor 208 which makes appropriate utilization of volatile storage 216 during the execution of such programming instructions. Those skilled in the art will now recognize that non-volatile storage unit 212 and volatile storage 216 are examples of computer readable media that can store programming instructions executable on processor 208. Furthermore, non-volatile storage unit 212 and volatile storage 216 are also examples of memory units and/or memory modules.

Processor 208 in turn can also be configured to a display 224 and optionally a speaker. Display 224 comprises any suitable one of or combination of CRT (cathode ray tube) and/or flat panel displays (e.g. LCD (liquid crystal display), plasma, OLED (organic light emitting diode), capacitive or resistive touchscreens, and the like).

In some implementations, input device 200 and display 224 are external to device 101, with processor 208 in communication with each of input device 200 and display 224 via a suitable connection and/or link.

Processor 208 also connects to a network communication interface 228, which can be implemented in some implementations as radios configured to communicate over respective links 105. In general, it will be understood that interface 228 is configured to correspond with the network architecture that is used to implement link 106. In other implementations a plurality of links with different protocols can be employed and thus interface 228 can comprise a plurality of interfaces to support each link. It should be understood that in general a wide variety of configurations for device 101 are contemplated.

In particular, non-volatile storage 212 can store an application 236 for throttling transmission of data to network 105, which can be processed by processor 208. For example, non-volatile storage 212 also stores a communication application 240 and a plurality of further applications 242-1, 242-2, 242-3...242-n. Non-volatile storage 212 further stores an aggregate token bucket 250 associated with communication application 240, and respective application token buckets 252-1, 252-2, 252-3...252-n associated with respective further applications 242-1, 242-2, 242-3...242-n. It is further appreciated that while four applications 242 are depicted in Fig. 2, any suitable number of applications 242 can be stored at device 101, and can be more or less than four.

It is appreciated that each of applications 240, 242 and token buckets 250, 252 can be processed by processor 208 along with application 236 to throttle data from device 101.

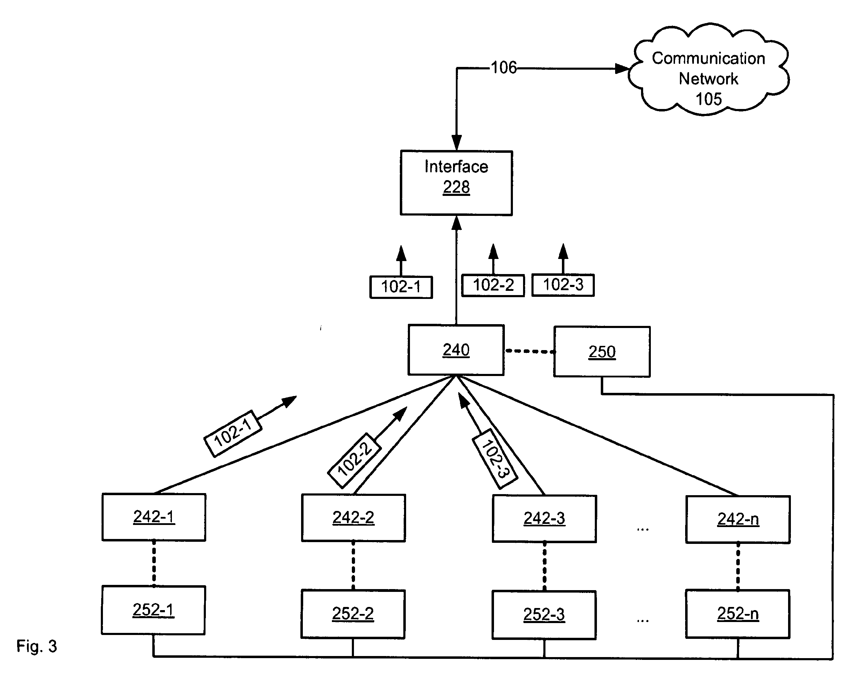

For example, attention is directed to Fig. 3 which depicts a schematic diagram of relationships between applications 240, 242, and when processed by processor 208, as well relationships between application 240 and interface 228. Specifically, application 240 comprises a communication application that transmits data 102 to network 105 via interface 228. In some non-limiting implementations, application 240 can comprise a messaging application, including but not limited to chat applications; indeed, it is appreciated that while messaging and/or chat applications are nominally used to transmit and receive text data, such messaging and/or chat applications can be enabled to transmit and receive any other type of suitable data, such as multimedia data, video data, music data, image data, and the like, as well as any suitable file transfer data, including but not limited to a URL link..

Each of Application 242 can comprise any suitable application for generating and/or processing data 102, including but not limited to multimedia data, video data, music data, image data and the like, though it is appreciated that any type of suitable data is within the scope of present implementations. However, applications 242 are generally appreciated to have limited or no messaging functionality. Hence, in present implementations, applications 240, 242 can be enabled to interact with each other such that data generated at one or more of applications 242 can be transmitted to network 105 via application 240.

It is also appreciated that one or more of applications 242 can comprise an application associated with application 240. For example, application 242-1 can comprise an application for generating message data and/or chat data while application 240 can comprise an associated client for transmitting data generated by application 242-1.

It is further appreciated that only a given number of applications 242 can be active at any given time. Further, active applications 242 can become inactive, while inactive applications 242 can become active, for example by respectively closing and opening given applications 242. In example implementations depicted in Fig. 3, it is appreciated that only three applications 242-1, 242-2, 242-3 are active and generating data 102-1, 102-2, 102-3 which are received at application 240 and transmitted to network 105 via interface 228. However, any of the inactive applications 242 can become active at any time and/or any of active applications 242 can become inactive at any given time.

In any event, it is appreciated that with the wide availability and increase in popularity of media rich bandwidth intensive applications the load on networks including but not limited to carrier networks, is growing exponentially. With the deployment of more social applications, many of which become viral in a very short time, pressure is growing on service providers and/or network operators to maintain good user experience, however it is appreciated that many service providers and/or network operators also need to control the amount of data throughput devices can push through a network, keeping network expansion costs under control and within budget while keeping user experience high. Such control of data is also needed to control rogue users and/or applications to prevents them from flooding networks, potentially degrading the user experience.

Hence, token buckets 250, 252 are provided; aggregate token bucket 250 throttle data transmission from application 240, while application token buckets 252 throttles transmission of data from respective applications 242. The associations between each token bucket 250, 252 and its respective application 240, 242 are depicted in Fig. 3 via stippled lines there between.

However, it is also appreciated that in present implementations, there is a relationship between aggregate token bucket 250 and application token buckets 252. For example, aggregate token bucket 250 can be provided with token parameters 122 for throttling transmission of data from device 101. For example, token parameters 122 can be provided to device 101 from server 120: in these implementations, server 120 is associated with a service provider and/or network operator which determines token parameters 122 for device 101, and indeed determines respective token parameters for each device associated with the service provider and/or network operator; in some implementations, the token parameters can be the same for each device associated with the service provider and/or network operator, however it is appreciated that token parameters can be determined on a device by device basis.

Non-limiting examples of token parameters can include but are not limited to a maximum token bucket size, also referred to hereafter as TB size, and a token bucket refresh rate, also referred to hereafter as refresh rate. In non-limiting examples, TB size comprises a maximum amount of data that can be transmitted by application 240, for example 1000 kB (kilobytes); and the refresh rate can comprise a rate at which token bucket 250 is refreshed, for example 100 kB/minute (kBm). Using these parameters, the initial size of token bucket 250 is 1000 kB, such that application 240 can transmit up to 1000 kB without restriction, and the token bucket 250 is refreshed at a rate of 100 kBm. Hence, application 240 can transmit bursts of data 102 up to 1000 kBm, but if the transmit rate of data 102 exceeds the refresh rate of 100kBm, the transmit rate of data 102 will shortly be limited to 100 kBm once the 1000 kB in token bucket 150 is used up.

In general, the maximum total bucket size (i.e. a suitable allowable data burst) can be determined from a total capacity of network 105 optionally combined with a probability of reaching a total network capacity (e.g. if all devices on network 105 were to simultaneously burst the maximum total bucket size). Further, refresh rates for devices can be determined from data usage associated with network 105, including but not limited to average traffic parameters associated with network 105 divided by the number of devices on network 105, however any other suitable type of data usage parameter is within the scope of present implementations. For example, other data usage parameters other than average data usage are within the scope of present implementations.

In any event, token parameters can be distributed to the respective application token buckets 252 to throttle data 102 from each application 242, for example by processing application 236. In other words, when token bucket 150 is provided with token parameters 122, processor 220 distributes token parameters 122 to token buckets 252 upon processing application 236.

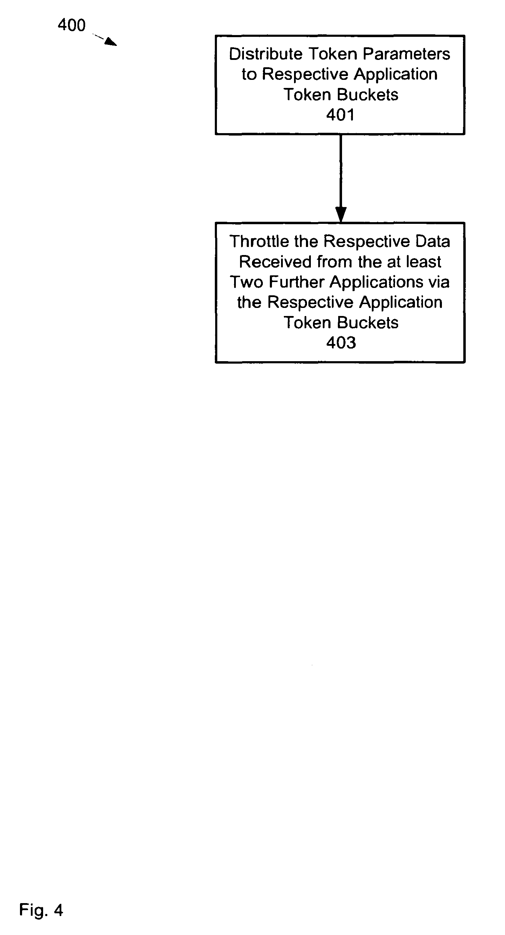

For example, the aggregate token bucket size and refresh rate are distributed between token buckets 252. As such, attention is now directed to Fig. 4 which depicts a method 400 for enabling access of a first mobile electronic device to at least one network accessible by a second mobile electronic device. In order to assist in the explanation of method 400, it will be assumed that method 400 is performed using system 100. Furthermore, the following discussion of method 400 will lead to a further understanding of system 100 and its various components. However, it is to be understood that system 100 and/or method 400 can be varied, and need not work exactly as discussed herein in conjunction with each other, and that such variations are within the scope of present implementations. It is appreciated that method 400 can be specifically implemented in system 100 by device 101 processing application 236.

It is appreciated that method 400 assumes that token parameters 122 have been received at aggregate token bucket 250 as described above.

At block 401, token parameters 122 of aggregate token bucket 240 are distributed to respective application token buckets 252 associated with at least two further applications 242, the communication application 240 enabled to receive respective data 102 from the at least two further applications 242 for transmission to network 105 via the communication interface 228.

At block 403, respective data 102 received from the at least two further applications 242 is throttled via the respective application token buckets 252.

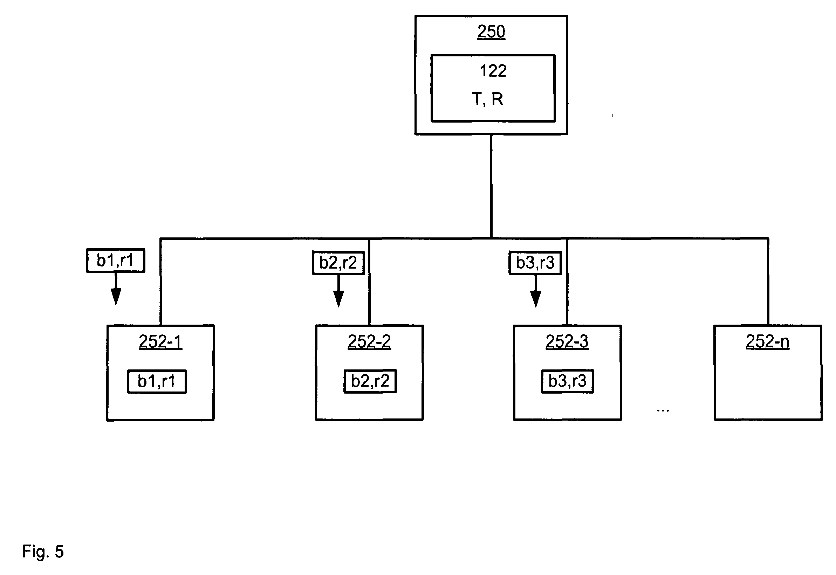

For example, attentions is directed to Fig. 5 which depicts a schematic diagram of aggregate token bucket 250 and application token buckets 252. Token parameters 122 comprise a maximum aggregate token bucket size, T, and refresh rate R. Each of TB size T and refresh rate R is distributed between token buckets 252 by distributing each of TB size T and refresh rate R into portions, for example respective TB sizes b1, b2, b3...bn, and respective refresh rates r1, r2, r3...rn, where the sum of all the respective TB sizes b1, b2, b3...bn add up to TB size T, and the sum of all the respective refresh rates r1, r2, r3...rn add up to refresh rate R.

Further, it is generally appreciated that, in some implementations, token parameters 122 are distributed between token buckets 252 associated with active applications 242. As such, in Fig. 5, it is assumed that applications 242-1, 242-2, 242-3 are activated as in Fig. 4, and hence TB size T and refresh rate R is distributed among associated token buckets 252-1, 252-2. 252-3 via respective token bucket sizes b1, b2, b3 and respective refresh rates r1, r2, r3. Hence, application 242-1 is throttled to TB size b1 and refresh rate r1 via token bucket 252-1, application 242-2 is throttled to TB size b2 and refresh rate r2 via token bucket 252-2, and application 242-3 is throttled to TB size b3 and refresh rate r3 r2 via token bucket 252-3. Further, b1+b2+b3=T, and r1+r2+r3=R.

In other words, in these implementations, token parameters 122 comprise: a maximum token bucket size T for controlling bursts of data 102; and a refresh rate, R wherein respective maximum token buckets sizes b and respective refresh rates r are determined for each of the respective application token buckets 252 such that a respective maximum token bucket size sum is approximately the maximum token bucket size, and a respective refresh rate sum is approximately the refresh rate. However, in some implementations, a respective maximum token bucket size sum can be approximately the maximum token bucket size, and a respective refresh rate sum can be approximately the refresh rate. For example, the respective maximum token bucket size sum can be within a first given range and/or a first given percentage of the maximum token bucket size, and a respective refresh rate sum can be within a second given range and/or a second given percentage the refresh rate.

It is further appreciated that no token parameters 122 are distributed to other token buckets 252, such as token bucket 252-n.

However, in other implementations, token parameters 122 can be distributed between token buckets 252 associated with both active applications 242 and at least one inactive application 242. For example token parameters 122 can be distributed to a token bucket associated with an inactive application 242 whose probability of being activated within a given time period is above a threshold value, the probability of being activated based on historical usage or any other suitable method; when the inactive application 242 does not become inactive within the given time period, token parameters 122 can be redistributed among token buckets 252 associated with active applications 242. In further implementations, a probability factor can be used to determine token parameters 122 for aggregate TB based on historical usage data of any and/or all applications 242 during a given time period; in some implementations, token parameters 122 of the aggregate TB can then be redistributed among active applications 242 during the same given time period.

While any suitable method for distributing each of TB size T and refresh rate R into portions is within the scope of present implementations, in some non-limiting implementations, the distribution is performed via weights associated with each application 242. For example, each application 242-1, 242-2, 242-3...242-n can be associated with respective weights W1, W2, W3...$W_n$. For example, weights W can be determined from data rates associated with each active application 242. Data rates w1, w2, w3...$w_n$ in any suitable manner including but not limited to being determined from one or more of a data rate associated with each application 242, an application developer requested data rate associated with each application 242, historical data rates associated with each application 242, test data rates associated with each application 242 and the like.

In some implementations, when each application 242 is installed, a data rate parameter can be provided as part of the installation data received from an applications server (not depicted). When an application 242 is upgraded, the data rate associated with the application 242 can change via update data received from an update server (not depicted) and/or an applications server.

An application developer requested data rate associated with each application 242 can be determined by receiving data from a developer of a given application 242 indicating a preferred data rate at which the given application 242 will optimally perform.

An historical data rate of a given application 242 can be determined by storing data rates that the given application 242 uses when active and determining an average historical data rate there from.

A test data rate of a given application 242 can be determined from test data associated with the given application 242 to determine a data rate at which the given application will optimally perform.

It is further appreciated that one or more data rates w1, w2, w3...$w_n$ can be received along with token parameters 122, and/or from any other suitable remote computing device.

In any event, once data rates w1, w2, w3...$w_n$ associated with each application 242 are determined, device 101 (e.g. via processor 220) can determine respective weights associated with each of the respective application token buckets 252 such that token parameters 122 associated with aggregate token bucket 250 are distributed to each of the respective application token buckets 252 according to the respective weights. In other words, each of the respective weights are determined from respective data rates associated with each of active applications 242.

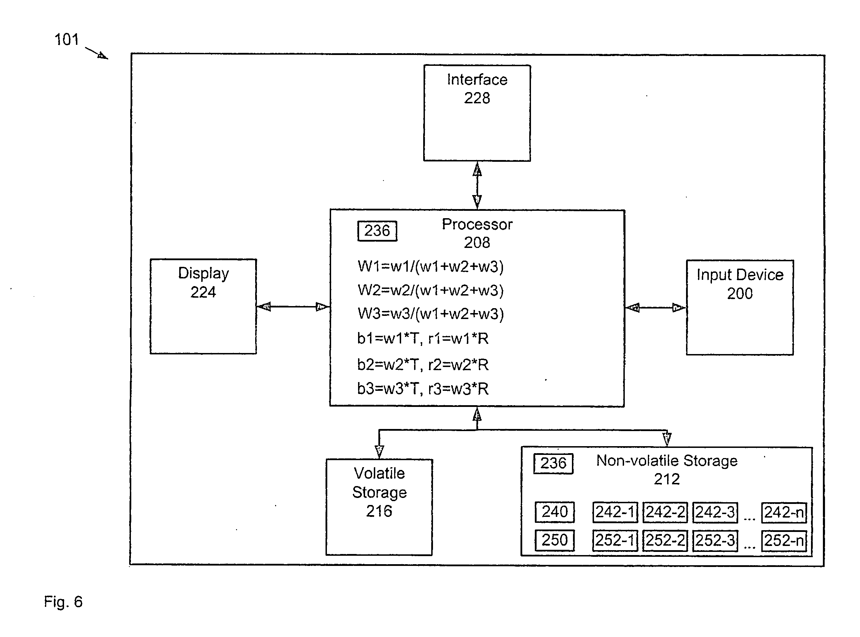

Hence, for example, assuming that data rates w1, w2, w3 have been determined and are respectively associated with active applications 242-1, 242-2, 242-3, then respective weights for each active application 242 can be determined by dividing the associated data rate w by the sum of the data rates of all the active applications. Hence, weights W1, W2, W3 associated with active applications 242-1, 242-2, 242-3 are determined by processor 220, as depicted in Fig. 6:

$$W1 = w1/(w1+w2+w3);$$

$$W2 = w2/(w1+w2+w3);$$

and

$$W3 = w3/(w1+w2+w3).$$

Hence, each application token bucket size b1, b2, b3 can be determined by multiplying the aggregate TB size T by the respective weight w1, w2, w3. Similarly, each application refresh rate r1, r2, r3 can be determined by multiplying the aggregate refresh rate R by the respective weight w1, w2, w3.

Hence, for each active application 242-1, 242-2, 242-3:

$$b1 = w1*T, \ r1 = w1*R;$$

$$b2 = w2*T, \ r2 = w2*R;$$

and

$$b3 = w3*T, \ r3 = w3*R.$$

Once these (b,r) values are distributed to token buckets 252-1, 252-2, 252-3 of active applications 242-1, 242-2, 242-3, and token buckets 252-1, 252-2, 252-3 then cause data 102-1, 102-2, 102-3 to be throttled from active applications 242-1, 242-2, 242-3.

It is yet further appreciated that method 400 can be repeated to redistribute token parameters 122 among the respective application token buckets 252 associated with active applications 242 when at least one of: one or more of applications 242 becomes inactive; and one or more of applications 242 become active. Hence, data 102 from each active application 242 is throttled accordingly.

It is yet further appreciated that at least one of applications 242 can remain unthrottled. For example, in implementations where one more of applications 242 can comprise an application associated with application 240 (such as application 242-1 comprising an application for generating message data and/or chat data while application 240 can comprise an associated client for transmitting data generated by application 242-1), the one or more applications 242 associated with application 240 can remain unthrottled. Using application 242-1 as a non-limiting example, token bucket 250 can be used to throttle data for application 220, except for data 102-1 originating from application 242-1. Hence, data 102-1 is not throttled, and further there is no application token buckets 252-1 associated therewith. Hence, token parameters 122 are distributed only between application token buckets 252-2....252-n, to throttle associated applications 242-2...242-n. Furthermore, in some of these implementations, data 102 from the unthrottled application 242 can be assigned transmission priority. In this way, data 102 from an application 242 associated with communications application 242 can be unaffected by throttling, and further third party applications using communications application 240 to transmit data can be throttled and/or controlled.

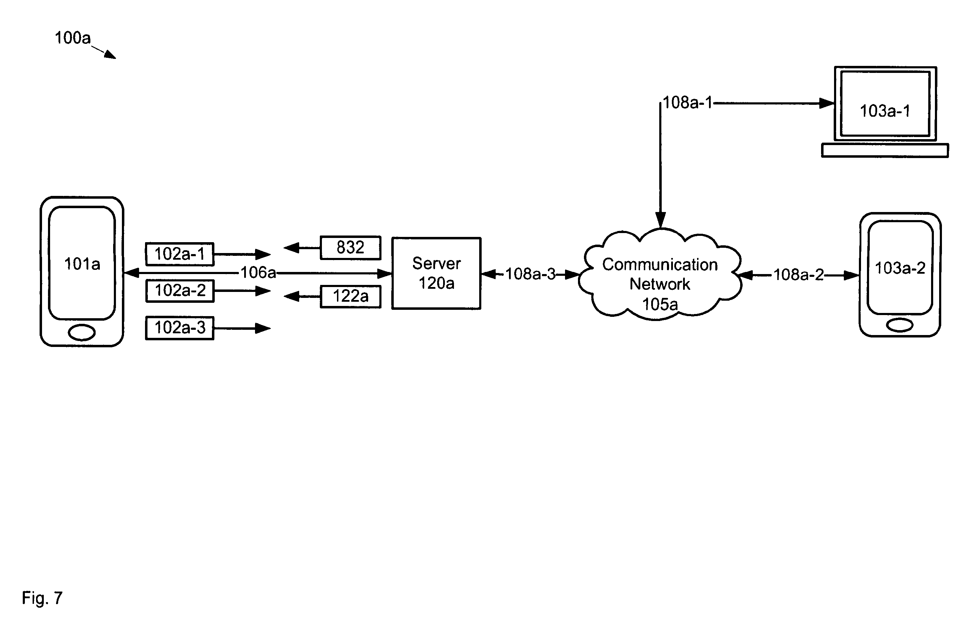

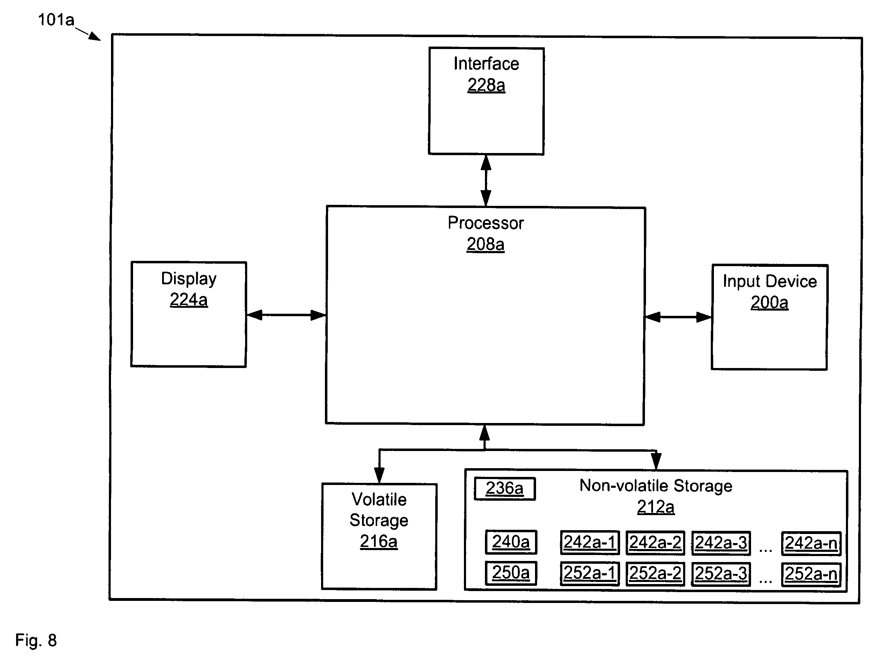

Attention is now directed to Figs. 7 and 8, which are substantially similar to respectively Figs. 1 and 2, with like elements having like numbers, however with an "a" appended thereto. However, with reference to Fig. 7, in these implementations, server 120a is further enabled as a communications server. In some implementations server 120a can be associated with communication application 240a such that all communications between communication application 240a data and other devices 103a pass through server 120a. For example, while in Fig.7, server 120a is depicted as in communication with network 105a, in other implementations, server 120a can be an element of network 105a such that data 102a received from application 240a is routed to server 120a before being transmitted by server 120a to a respective device 103a. It is further appreciated that otherwise server 120a can be similar to server 120.

In any event, server 120a is generally enabled to determine scaling data 832 by analyzing traffic there through to determine loads on server 120a and/or any associated network, such as network 105a, as well as transmit scaling data 832 to device 101a to periodically scale token parameters 122a of token bucket 250a. In turn, scaled token parameters can be distributed to application token buckets 252 as described above. It is appreciated that scaling data 832 can be transmitted periodically and/or on demand and/or as loads on server 120a and/or an associated network change.

For example, server 120a can determine time of day network usage probabilities which can be normalized and thereafter provided as a table in scaling data 832. For example, in some implementations, an average network usage can be determined by averaging network usage over a given time period and/or by determining a sample period mean. Further, network usage can be provided for predetermined units of time, such as every hour. Hourly network usage can then be scaled by dividing the hourly network usage by the average network usage, such that a value of a normalized network usage probability of "1" indicates that network usage is average at a given hour. Similarly, a normalized network usage probability of "1.1" indicates that network usage is 10% above average at another given hour. Hence, for example, scaling data 832 can comprise a table of normalized network usage probabilities, each of which can be used as scaling factor for token parameters 122a. an example portion of scaling data 832 is depicted in Table 1:

Table 1

| Tuesday | |
|---|---|
| Time | Scaling Factor |
| 20:00 | 1.2 |
| 21:00 | 1.1 |
| 22:00 | 1.0 |
| 23:00 | 1.0 |
| 24:00 | 0.9 |
| Wednesday | |
| 00:00 | 0.8 |
| 01:00 | 0.7 |

While Table 1 is arranged in rows and columns, in other implementations scaling data 832 can comprise any suitable format. Further, in these implementations, scaling data 832 comprises hourly times (e.g. 20:00, 21:00, etc.) for given days (e.g. Tuesday and Wednesday) and scaling factors associated with each hour, the scaling factors determined as described above.

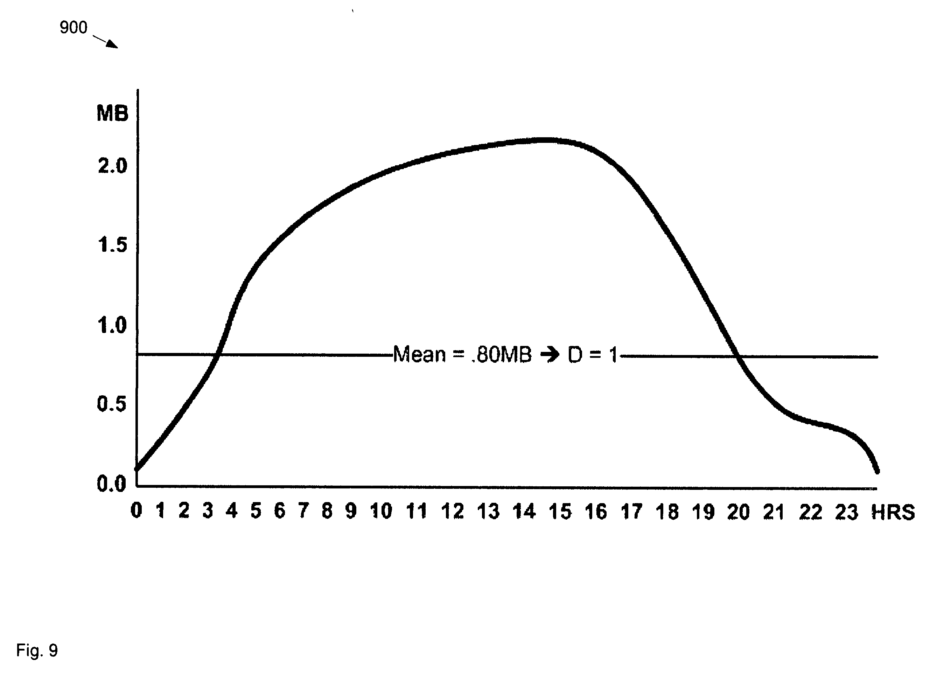

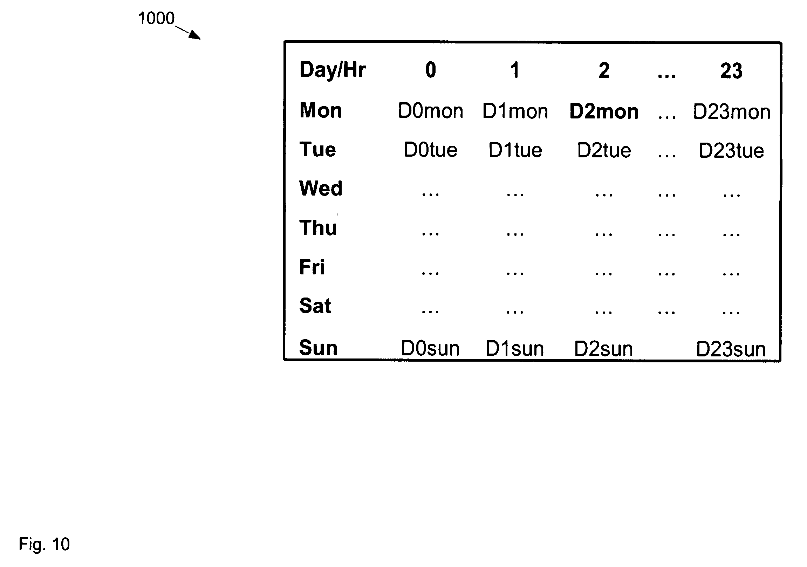

A non-limiting example of determining a mean of network load/usage is provided in Fig. 9, which depicts a graph 900 of network load over a 24 hour period, with a mean usage of 0.80 MB, which is normalized to D="1", D being a time of day (TOD) scaling factor. However, it is appreciated that the TOD scaling factor, D, could be normalized to any other suitable scaling factor other than "1", and further could be based on any suitable time period, other than a 24 hour period. Another example, of scaling data 832 is provided in Fig. 10, which depicts a table 1000 of scaling factors D (e.g. for Monday: D0mon, D1mon....etc.) arranged by rows corresponding to days of the week and columns corresponding to hours of the day.

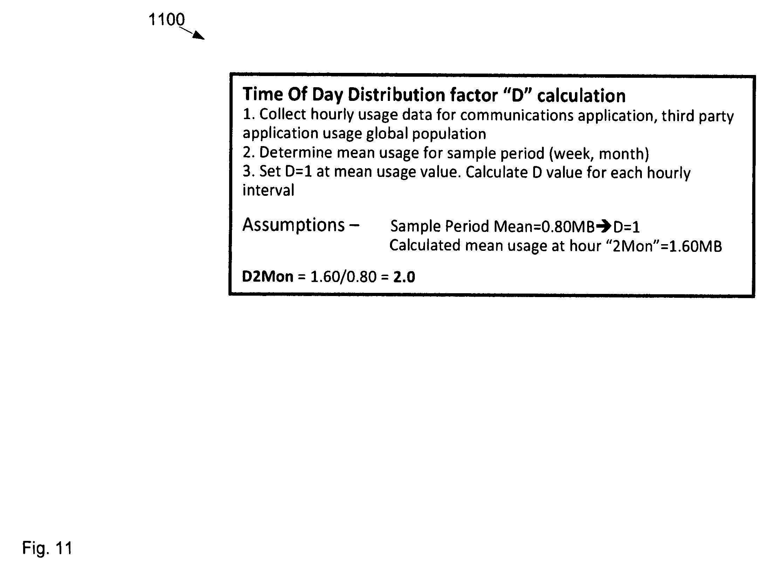

A method 1100 of determining TOD distribution/scaling factors D is depicted in Fig. 11: Hourly usage data is collected for the global population of devices on network 105 implementing communications application 240a and third party application usage (i.e. applications 242a). Mean usage is determined for given sample periods (e.g. over a day, week, month). D=1 is set as the mean usage value and a D value is calculated for each hourly interval. For example, with reference to Fig. 9, when the Sample Period Mean=0.80MB, D=1. Then, if the calculated mean usage at hour "2Mon"=1.60MB, then D2Mon in table 1000 1.60/0.80 = 2.0. In other words, in these implementations scaling data 832 is based on historical network usage. Again, however, it appreciated that D could be normalized to any other suitable scaling factor other than "1", and further could be based on any suitable time period, other than a 24 hour period, and that the above calculation is provided as an example only, and not to be considered unduly limiting.

In any event, once scaling data 832 is received, token parameters 122a are scaled periodically according to scaling data 832 as will be described hereafter. For example, if T, R are the aggregate token bucket sizes and refresh rates as described above, then each of T, R can be scaled hourly using the TOD distribution factor D for that hour:

$$Ta=T*D;$$

and

$$Ra=R*D.$$

Further, the token bucket size ba (corresponding to token bucket size b described above) and refresh rate ra (corresponding to refresh rate r described above) for each application 242a can be determined from:

$$ba=W*Ta$$

$$ra=W*Ra,$$

where "W" is the weight for each respective application described above.

Furthermore, using Table 1, or Table 1100, or any other suitable scaling data 832, at 1 hr intervals, processor 220a, via processing of application 236a, recalculates aggregate TB size Ba, and token refresh rate Ra using D values for that hour.

Furthermore, in these implementations, data for each respective application 242a can be collected. For example, data collection counters can be set to zero each hour and data collected for each respective application 242a and transmitted to server 120a, either periodically, e.g. hourly, or at any other suitable time. For example, such collected data can be transmitted to server 120a as part of a parameter change request to change ToD D scaling factors/parameters.

Furthermore, it is appreciated that as applications 242a become active or inactive, token parameters 122a are redistributed as described above.

It is further appreciated that a plurality of communication devices, similar to device 101a, scaling data 832 can either be the same for all devices interacting with server 120a and/or network 105a. In other words, server 120a can be enabled to provide communications and/or analysis for the plurality of communication devices, including device 101a, and determine scaling data for each of the plurality of communication devices and transmit scaling data to each of the plurality of communication devices. In some of these implementations, scaling data transmitted to all of the plurality of communication devices can be the same scaling data, such as scaling data 832 such that transmitted data is similarly scaled for each of the plurality of communication devices;. However, in other implementations, scaling data can be specific to one or more of the plurality of the communication device such that transmission of data at the one or more of the plurality of communication devices is scaled independent of the others of the plurality of communication devices. Hence, transmission of data 102a from device 101a can be controlled independently of any other devices using network 105a and/or server 120a. For example, consider that device 101a is associated with a rogue user who has caused one or more of applications 240a, 242a to transmit large amounts of data 102a such that a larger than allotted amount of bandwidth of network 105a is being used by device 101a. Server 120a can determine that device 101a is transmitting large amounts of data 102a and transmit scaling data 832 to device 101a comprising scaling values (i.e. TOD D scaling factors/parameters) that cause the amount of data 102a to be transmitted to be severely throttled, such as TOD D scaling factors of approximately 0.1-0.3, or any other suitable scaling factors.

It is yet further appreciated that scaling data 832 can include weighting data for a given application 242a to cause the given application 242a to be throttled in a specific manner. For example, consider when the given application 242a is upgraded and bandwidth usage is thereby increased, that can be larger than an acceptable threshold value. To address this problem, at least one set of respective token parameters associated with a respective application token bucket 252a is adjusted according to respective scaling parameters received from a remote computing device such as server 120a, such that transmission of data 102 is throttled to acceptable levels and/or to punitive levels.

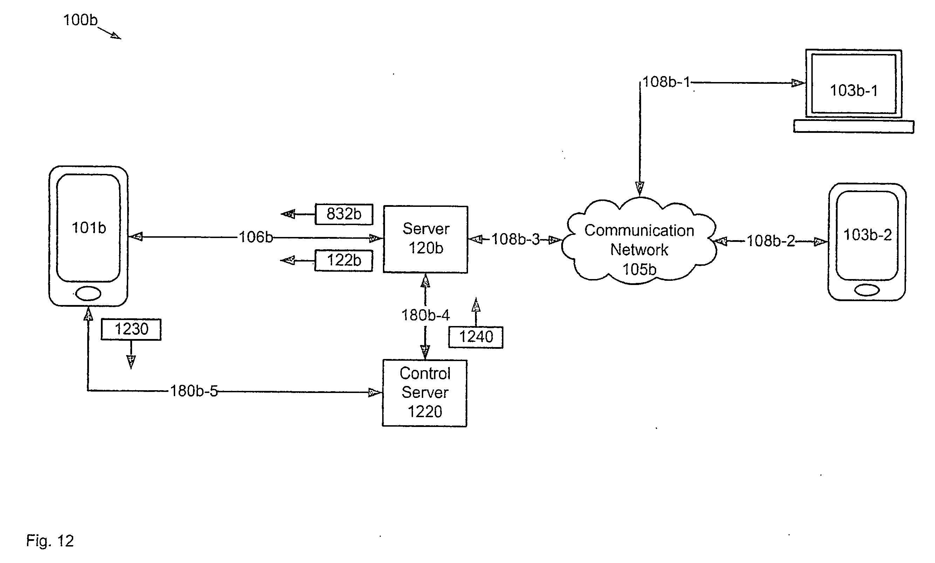

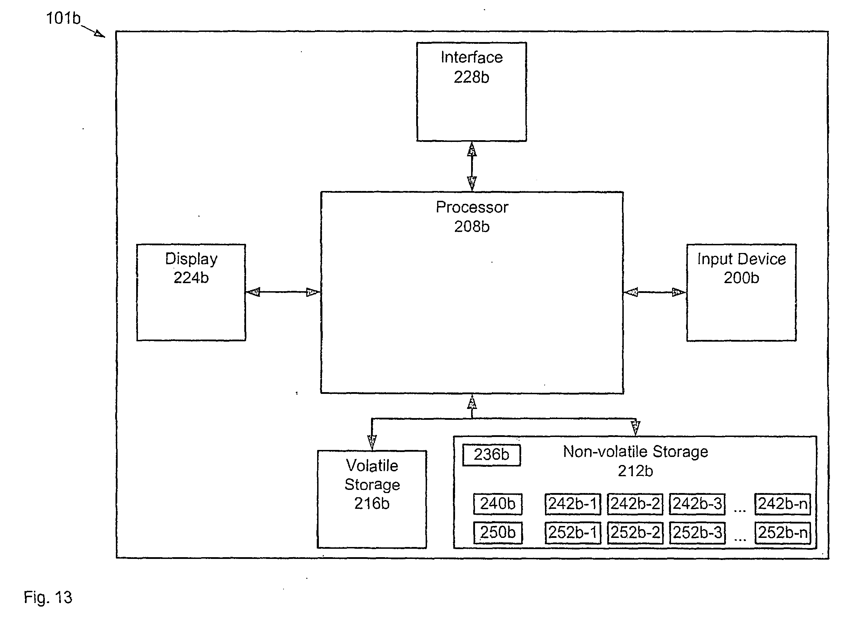

Attention is now directed to Figs. 12 and 13 which are similar to Figs. 7 and 8 respectively, with like elements having like numbers with a "b" appended thereto rather than an "a". However system 100b further comprises a control server 1220 in communication with server 120b via a link 180b-4 and in communication with device 101b via a link 180b-5, each of links 180b-4 and 180b-5 being similar or different to other links 180 and/or link 106b. It is further appreciated that server 1220 can be similar to server 120b, but enabled to analyze statistics received from device 101b and trigger server 120b to transmit data 832b to device 101b. In any event, in these implementations, processor 208b of device 101b is further enabled to collect statistics on data usage and/or transmission by applications 242 and transmit a statistics log 1230 to control server 1220 periodically (e.g. once every 24 hours) and/or at any other suitable time. It is furthermore appreciated that data collection at device 101b for log 1230 can be implemented on a periodic basis; for example, statistics can be collected for data usage/transmission on an hourly basis. Log 1230 can be processed by server 1220 and when it is determined that scaling data 832b should be updated at device 101b, server 1220 transmit a parameter change request 1240 to server 120b to cause/trigger server 120b to transmit scaling data 832b. In this manner, scaling data 832b can be updated based on data usage by applications 242b at device 101b.

Those skilled in the art will appreciate that in some implementations, the functionality of devices 101, 101a, 101b, server 120, 120a, 120b, and control server 1220 can be implemented using pre-programmed hardware or firmware elements (e.g., application specific integrated circuits (ASICs), electrically erasable programmable readonly memories (EEPROMs), etc.), or other related components. In other implementations, the functionality of devices 101, 101a, 101b, server 120, 120a, 120b, and control server 1220 can be achieved using a computing apparatus that has access to a code memory (not shown) which stores computer-readable program code for operation of the computing apparatus. The computer-readable program code could be stored on a computer readable storage medium which is fixed, tangible and readable directly by these components, (e.g., removable diskette, CD-ROM, ROM, fixed disk, USB drive). Furthermore, it is appreciated that the computer-readable program can be stored as a computer program product comprising a computer usable medium. Further, a persistent storage device can comprise the computer readable program code. It is yet further appreciated that the computer-readable program code and/or computer usable medium can comprise a non-transitory computer-readable program code and/or non-transitory computer usable medium. Alternatively, the computer-readable program code could be stored remotely but transmittable to these components via a modem or other interface device connected to a network (including, without limitation, the Internet) over a transmission medium. The transmission medium can be either a non-mobile medium (e.g., optical and/or digital and/or analog communications lines) or a mobile medium (e.g., microwave, infrared, free-space optical or other transmission schemes) or a combination thereof.

A portion of the disclosure of this patent document contains material which is subject to copyright protection. The copyright owner has no objection to the facsimile reproduction by any one of the patent document or patent disclosure, as it appears in the Patent and Trademark Office patent file or records, but otherwise reserves all copyrights whatsoever.

Persons skilled in the art will appreciate that there are yet more alternative implementations and modifications possible, and that the above examples are only illustrations of one or more implementations. The scope, therefore, is only to be limited by the claims appended hereto.

**Claims**

1. A communication device (101, 101a, 101b) comprising:

   a processor (208, 208a, 208b), and a communication interface (228, 228a, 228b), the processor (208, 208a, 208b) enabled to:

      distribute token parameters of an aggregate token bucket, associated with a communication application, to respective application token buckets associated with at least two further applications, the communication application enabled to receive respective data from the at least two further applications for transmission to a network via the communication interface (228, 228a, 228b);
      determine respective weights associated with each of the respective application token buckets from respective data rates associated with each of the at least two further applications, such that the token parameters associated with the aggregate token bucket are distributed to each of the respective application token buckets according to the respective weights;

throttle the respective data received from the at least two further applications via the respective application token buckets; and,

redistribute the distributed token parameters among the respective application token buckets associated with active applications when at least one of:

> one or more of the at least two further applications becomes inactive; and one or more additional further applications become active.

2. The computing device of claim 1, wherein the token parameters comprise:

> a maximum token bucket size for controlling bursts of the data; and a refresh rate, wherein respective maximum token buckets sizes and respective refresh rates are determined for each of the respective application token buckets such that a respective maximum token bucket size sum is approximately the maximum token bucket size, and a respective refresh rate sum is approximately the refresh rate.

3. The computing device of any previous claim, wherein the token bucket parameters are scaled periodically according to scaling data received from a remote computing device.

4. The computing device of claim 3, wherein the scaling data is one or more of:

> comprising time of day network usage probabilities;
> based on historical network usage; and, is one of:

> > for a plurality of communication devices (101, 101a, 101b), including the communication device (101, 101a, 101b), such that transmitted data is similarly scaled for each of the plurality of devices; and, specific to the communication device (101, 101a, 101b) such that transmission of the data at the communication device (101, 101a, 101b) is scaled independent of the other of the plurality of devices.

5. A method comprising:

distributing, at a processor (208, 208a, 208b) of a computing device, token parameters of an aggregate token bucket, associated with a communication application, to respective application token buckets associated with at least two further applications, the communication application enabled to receive respective data from the at least two further applications for transmission to a network via a communication interface (228, 228a, 228b);

determining, at the processor (208, 208a, 208b), respective weights associated with each of the respective application token buckets from respective data rates associated with each of the at least two further applications, such that the token parameters associated with the aggregate token bucket are distributed to each of the respective application token buckets according to the respective weights;

throttling, at the processor (208, 208a, 208b), the respective data received from the at least two further applications via the respective application token buckets; and,

redistributing, at the processor (208, 208a, 208b), the distributed token parameters among the respective application token buckets associated with active applications when at least one of:

> one or more of the at least two further applications becomes inactive; and one or more additional further applications become active.

6. The method of claim 5, where the token parameters comprise:

> a maximum token bucket size for controlling bursts of the data; and a refresh rate, wherein respective maximum token buckets sizes and respective refresh rates are determined for each of the respective application token buckets such that a respective maximum token bucket size sum is approximately the maximum token bucket size, and a respective refresh rate sum is approximately the refresh rate.

7. The method of any of claims 5 to 6, wherein the token bucket parameters are scaled periodically according to scaling data received from a remote computing device.

8. The method of claim 7, wherein the scaling data is one or more of:

> comprising time of day network usage probabilities;
> based on historical network usage; and,

is one of:

for a plurality of communication devices (101, 101a, 101b), including the communication device (101, 101a, 101b), such that transmitted data is similarly scaled for each of the plurality of devices; and,

specific to the communication device (101, 101a, 101b) such that transmission of the data at the communication device (101, 101a, 101b) is scaled independent of the other of the plurality of devices.

9. A computer program product, comprising a computer usable medium having a computer readable program code adapted to be executed to implement a method comprising:

distributing, at a processor (208, 208a, 208b) of a computing device, token parameters of an aggregate token bucket, associated with a communication application, to respective application token buckets associated with at least two further applications, the communication application enabled to receive respective data from the at least two further applications for transmission to a network via a communication interface (228, 228a, 228b);

determining, at the processor (208, 208a, 208b), respective weights associated with each of the respective application token buckets from respective data rates associated with each of the at least two further applications, such that the token parameters associated with the aggregate token bucket are distributed to each of the respective application token buckets according to the respective weights;

throttling, at the processor (208, 208a, 208b), the respective data received from the at least two further applications via the respective application token buckets; and,

redistributing, at the processor (208, 208a, 208b), the distributed token parameters among the respective application token buckets associated with active applications when at least one of:

one or more of the at least two further applications becomes inactive; and

one or more additional further applications become active.

**Patentansprüche**

1. Eine Kommunikationsvorrichtung (101, 101a, 101b), die aufweist:

einen Prozessor (208, 208a, 208b) und eine Kommunikationsschnittstelle (228, 228a, 228b), wobei der Prozessor (208, 208a, 208b) befähigt ist zum:

Verteilen von Token-Parametern eines Sammel-Token-Buckets, der mit einer Kommunikationsanwendung assoziiert ist, an jeweilige Anwendungs-Token-Buckets, die mit zumindest zwei weiteren Anwendungen assoziiert sind, wobei die Kommunikationsanwendung befähigt ist, jeweilige Daten von den zumindest zwei weiteren Anwendungen zu empfangen zur Übertragung an ein Netzwerk über die Kommunikationsschnittstelle (228, 228a, 228b);

Bestimmen jeweiliger Gewichtungen, die mit jedem der jeweiligen Anwendungs-Token-Buckets assoziiert sind, aus jeweiligen Datenraten, die mit jeder der zumindest zwei weiteren Anwendungen assoziiert sind, derart, dass die Token-Parameter, die mit dem Sammel-Token-Bucket assoziiert sind, an jeden der jeweiligen Anwendungs-Token-Buckets gemäß den jeweiligen Gewichtungen verteilt werden;

Drosseln der jeweiligen Daten, die von den zumindest zwei weiteren Anwendungen empfangen werden, über die jeweiligen Anwendungs-Token-Buckets; und

erneutes Verteilen der verteilten Token-Parameter unter den jeweiligen Anwendungs-Token-Buckets, die mit aktiven Anwendungen assoziiert sind, wenn zumindest eines aus:

eine oder mehrere der zumindest zwei weiteren Anwendungen inaktiv wird/werden; und

eine oder mehrere zusätzliche weitere Anwendung(en) aktiv wird/werden.

2. Die Computervorrichtung gemäß Anspruch 1, wobei die Token-Parameter aufweisen:

eine maximale Token-Bucket-Größe zum Steuern von Bursts der Daten; und eine Wiederholrate,

wobei jeweilige maximale Token-Bucket-Größen und jeweilige Wiederholraten für jeden der jeweiligen Anwendungs-Token-Buckets bestimmt werden derart, dass eine jeweilige Summe der maximalen Token-Bucket-Größe ungefähr die maximale Token-Bucket-Größe ist und eine jeweilige Wiederholrate-Summe ungefähr die Wiederholrate ist.

3. Die Computervorrichtung gemäß einem vorhergehenden Anspruch, wobei die Token-Bucket-Parameter regelmäßig gemäß Skalierungsdaten skaliert werden, die von einer entfernten Computervorrichtung empfangen werden.

4. Die Computervorrichtung gemäß Anspruch 3, wobei die Skalierungsdaten eines oder mehrere sind aus:

weisen Tageszeit-Netzwerknutzungs-Wahrscheinlichkeiten auf;
basieren auf historischer Netzwerknutzung; und sind eines aus:

für eine Vielzahl von Kommunikationsvorrichtung (101, 101a, 101b), einschließlich der Kommunikationsvorrichtung (101, 101a, 101b), derart, dass übertragene Daten ähnlich für jede der Vielzahl von Vorrichtungen skaliert werden; und
spezifisch für die Kommunikationsvorrichtung (101, 101a, 101b) derart, dass eine Übertragung der Daten an der Kommunikationsvorrichtung (101, 101a, 101b) unabhängig von der anderen der Vielzahl von Vorrichtungen skaliert wird.

5. Ein Verfahren, das aufweist:

Verteilen, an einem Prozessor (208, 208a, 208b) einer Computervorrichtung, von Token-Parametern eines Sammel-Token-Buckets, der mit einer Kommunikationsanwendung assoziiert ist, an jeweilige Anwendungs-Token-Buckets, die mit zumindest zwei weiteren Anwendungen assoziiert sind, wobei die Kommunikationsanwendung befähigt ist, jeweilige Daten von den zumindest zwei weiteren Anwendungen zu empfangen zur Übertragung an ein Netzwerk über eine Kommunikationsschnittstelle (228, 228a, 228b);
Bestimmen, an dem Prozessor (208, 208a, 208b), jeweiliger Gewichtungen, die mit jedem der jeweiligen Anwendungs-Token-Buckets assoziiert sind, aus jeweiligen Datenraten, die mit jeder der zumindest zwei weiteren Anwendungen assoziiert sind, derart, dass die Token-Parameter, die mit dem Sammel-Token-Bucket assoziiert sind, an jeden der jeweiligen Anwendungs-Token-Buckets gemäß den jeweiligen Gewichtungen verteilt werden;
Drosseln, an dem Prozessor (208, 208a, 208b), der jeweiligen Daten, die von den zumindest zwei weiteren Anwendungen empfangen werden, über die jeweiligen Anwendungs-Token-Buckets; und
erneutes Verteilen, an dem Prozessor (208, 208a, 208b), der verteilten Token-Parameter unter den jeweiligen Anwendungs-Token-Buckets, die mit aktiven Anwendungen assoziiert sind, wenn zumindest eines aus:

eine oder mehrere der zumindest zwei weiteren Anwendungen inaktiv wird/werden; und
eine oder mehrere zusätzliche weitere Anwendung(en) aktiv wird/werden.

6. Das Verfahren gemäß Anspruch 5, wobei die Token-Parameter aufweisen:

eine maximale Tokeri-Bucket-Größe zum Steuern von Bursts der Daten; und eine Wiederholrate,
wobei jeweilige maximale Token-Bucket-Größen und jeweilige Wiederholraten für jeden der jeweiligen Anwendungs-Token-Buckets bestimmt werden derart, dass eine jeweilige Summe der maximalen Token-Bucket-Größe ungefähr die maximale Token-Bucket-Größe ist und eine jeweilige Wiederholrate-Summe ungefähr die Wiederholrate ist.

7. Das Verfahren gemäß einem der Ansprüche 5 bis 6, wobei die Token-Bucket-Parameter regelmäßig gemäß Skalierungsdaten skaliert werden, die von einer entfernten Computervorrichtung empfangen werden.

8. Das Verfahren gemäß Anspruch 7, wobei die Skalierungsdaten eines oder mehrere sind aus:

weisen Tageszeit-Netzwerknutzungs-Wahrscheinlichkeiten auf;
basieren auf historischer Netzwerknutzung; und sind eines aus:

für eine Vielzahl von Kommunikationsvorrichtung (101, 101a, 101b), einschließlich der Kommunikationsvorrichtung (101, 101a, 101b), derart, dass übertragene Daten ähnlich für jede der Vielzahl von Vorrichtungen skaliert werden; und
spezifisch für die Kommunikationsvorrichtung (101, 101a, 101b) derart, dass eine Übertragung der Daten an der Kommunikationsvorrichtung (101, 101a, 101b) unabhängig von der anderen der Vielzahl von Vorrichtungen skaliert wird.

9. Ein Computerprogrammprodukt, das ein computerverwendbares Medium mit einem computerlesbaren Programmcode aufweist, der ausgebildet ist, ausgeführt zu werden zum Implementieren eines Verfahrens, das aufweist:

Verteilen, an einem Prozessor (208, 208a, 208b) einer Computervorrichtung, von Token-Parametern eines Sammel-Token-Buckets, der mit einer Kommunikationsanwendung assoziiert ist, an jeweilige Anwendungs-Token-Buckets, die mit zumindest zwei weiteren Anwendungen assoziiert sind, wobei die Kommunikationsanwendung befähigt ist, jeweilige Daten von den zumindest zwei weiteren Anwendungen zu empfangen zur Übertragung an ein Netzwerk über eine Kommunikationsschnittstelle (228, 228a, 228b);

Bestimmen, an dem Prozessor (208, 208a, 208b), jeweiliger Gewichtungen, die mit jedem der jeweiligen Anwendungs-Token-Buckets assoziiert sind, aus jeweiligen Datenraten, die mit jeder der zumindest zwei weiteren Anwendungen assoziiert sind, derart, dass die Token-Parameter, die mit dem Sammel-Token-Bucket assoziiert sind, an jeden der jeweiligen Anwendungs-Token-Buckets gemäß den jeweiligen Gewichtungen verteilt werden;

Drosseln, an dem Prozessor (208, 208a, 208b), der jeweiligen Daten, die von den zumindest zwei weiteren Anwendungen empfangen werden, über die jeweiligen Anwendungs-Token-Buckets; und

erneutes Verteilen, an dem Prozessor (208, 208a, 208b), der verteilten Token-Parameter unter den jeweiligen Anwendungs-Token-Buckets, die mit aktiven Anwendungen assoziiert sind, wenn zumindest eines aus:

eine oder mehrere der zumindest zwei weiteren Anwendungen inaktiv wird/werden; und

eine oder mehrere zusätzliche weitere Anwendung(en) aktiv wird/werden.

## Revendications

1. Dispositif de communication (101, 101a, 101b) comprenant :

un processeur (208, 208a, 208b), et une interface de communication (228, 228a, 228b), le processeur (208, 208a, 208b) activé pour :

distribuer des paramètres de jeton d'un seau à jetons d'agrégat, associé à une application de communication, à des seaux à jetons d'application respectifs associés à au moins deux autres applications, l'application de communication activée pour recevoir des données respectives en provenance des au moins deux autres applications pour la transmission à un réseau via l'interface de communication (228, 228a, 228b) ;

déterminer des poids respectifs associés à chacun des seaux à jetons d'application respectifs à partir de débits de données respectifs associés à chacune des au moins deux autres applications, de sorte que les paramètres de jeton associés au seau à jetons d'agrégat soient distribués à chacun des seaux à jetons d'application respectifs en fonction des poids respectifs ;

ralentir l'admission des données respectives reçues des au moins deux autres applications via les seaux à jetons d'application respectifs ; et,

redistribuer les paramètres de jeton distribués entre les seaux à jetons d'application respectifs associés à des applications actives lorsque au moins un de :

une ou plusieurs des au moins deux autres applications deviennent inactives ; et

une ou plusieurs autres applications additionnelles deviennent actives.

2. Dispositif informatique selon la revendication 1, dans lequel les paramètres de jeton comprennent :

une taille de seau à jetons maximum pour contrôler des rafales des données ; et un taux de rafraîchissement,

dans lequel des tailles de seaux à jetons maximums respectives et des taux de rafraîchissement respectifs sont déterminés pour chacun des seaux à jetons d'application respectifs de sorte qu'une somme de tailles de seaux à jetons maximums respectives soit approximativement la taille de seau à jetons maximum, et une somme de taux de rafraîchissement respectifs soit approximativement le taux de rafraîchissement.

3. Dispositif informatique selon l'une quelconque des revendications précédentes, dans lequel les paramètres de seau à jetons sont mis à l'échelle périodiquement en fonction de données de mise à l'échelle reçues d'un dispositif informatique distant.

4. Dispositif informatique selon la revendication 3, dans lequel les données de mise à l'échelle sont une ou plusieurs parmi :

comprenant des probabilités d'utilisation de réseau d'heure du jour ;

basées sur une utilisation de réseau historique ; et,

sont une de :

pour une pluralité de dispositifs de communication (101, 101a, 101b), comprenant le dispositif de communication (101, 101a, 101b), de sorte que des données transmises soient mises à l'échelle de façon similaire pour chacun de la pluralité de dispositifs ; et,

spécifiques au dispositif de communication (101, 101a, 101b) de sorte que la transmission des données au niveau du dispositif de communication (101, 101a, 101b) soit mise à l'échelle indépendamment de l'autre de la pluralité de dispositifs.

5. Procédé comprenant :

la distribution, au niveau d'un processeur (208, 208a, 208b) d'un dispositif informatique, de paramètres de jeton d'un seau à jetons d'agrégat, associé à une application de communication, à des seaux à jetons d'application respectifs associés à au moins deux autres applications, l'application de communication activée pour recevoir des données respectives en provenance des au moins deux autres applications pour la transmission à un réseau via une interface de communication (228, 228a, 228b) ;

la détermination, au niveau du processeur (208, 208a, 208b), de poids respectifs associés à chacun des seaux à jetons d'application respectifs à partir de débits de données respectifs associés à chacune des au moins deux autres applications, de sorte que les paramètres de jeton associés au seau à jetons d'agrégat soient distribués à chacun des seaux à jetons d'application respectifs en fonction des poids respectifs ;

le ralentissement d'admission, au niveau du processeur (208, 208a, 208b), des données respectives reçues des au moins deux autres applications via les seaux à jetons d'application respectifs ; et,

la redistribution, au niveau du processeur (208, 208a, 208b), des paramètres de jeton distribués entre les seaux à jetons d'application respectifs associés à des applications actives lorsque au moins un de :

une ou plusieurs des au moins deux autres applications deviennent inactives ; et

une ou plusieurs autres applications additionnelles deviennent actives.

6. Procédé selon la revendication 5, dans lequel les paramètres de jeton comprennent :

une taille de seau à jetons maximum pour contrôler des rafales des données ; et un taux de rafraîchissement,

dans lequel des tailles de seaux à jetons maximums respectives et des taux de rafraîchissement respectifs sont déterminés pour chacun des seaux à jetons d'application respectifs de sorte qu'une somme de tailles de seaux à jetons maximums respectives soit approximativement la taille de seau à jetons maximum, et une somme de taux de rafraîchissement respectifs soit approximativement le taux de rafraîchissement.

7. Procédé selon l'une quelconque des revendications 5 à 6, dans lequel les paramètres de seau à jetons sont mis à l'échelle périodiquement en fonction de données de mise à l'échelle reçues d'un dispositif informatique distant.

8. Procédé selon la revendication 7, dans lequel les données de mise à l'échelle sont une ou plusieurs parmi :

comprenant des probabilités d'utilisation de réseau d'heure du jour ;
basées sur une utilisation de réseau historique ; et,
sont une de :

pour une pluralité de dispositifs de communication (101, 101a, 101b), comprenant le dispositif de communication (101, 101a, 101b), de sorte que des données transmises soient mises à l'échelle de façon similaire pour chacun de la pluralité de dispositifs ; et,

spécifiques au dispositif de communication (101, 101a, 101b) de sorte que la transmission des données au niveau du dispositif de communication (101, 101a, 101b) soit mise à l'échelle indépendamment de l'autre de la pluralité de dispositifs.

9. Produit de programme informatique, comprenant un support utilisable par ordinateur ayant un code de programme lisible par ordinateur adapté pour être exécuté pour mettre en oeuvre un procédé comprenant :

la distribution, au niveau d'un processeur (208, 208a, 208b) d'un dispositif informatique, de paramètres de jeton d'un seau à jetons d'agrégat, associé à une application de communication, à des seaux à jetons d'application respectifs associés à au moins deux autres applications, l'application de communication activée pour recevoir des données respectives en provenance des au moins deux autres applications pour la transmission à un réseau via une interface de communication (228, 228a, 228b) ;

la détermination, au niveau du processeur (208, 208a, 208b), de poids respectifs associés à chacun des seaux à jetons d'application respectifs à partir de débits de données respectifs associés à chacune des au moins deux autres applications, de sorte que les paramètres de jeton associés au seau à jetons d'agrégat soient distribués à chacun des seaux à jetons d'application respectifs en fonction des poids respectifs ;
le ralentissement d'admission, au niveau du processeur (208, 208a, 208b), des données respectives reçues des au moins deux autres applications via les seaux à jetons d'application respectifs ; et,
la redistribution, au niveau du processeur (208, 208a, 208b), des paramètres de jeton distribués entre les seaux à jetons d'application respectifs associés à des applications actives lorsque au moins un de :

une ou plusieurs des au moins deux autres applications deviennent inactives ; et
une ou plusieurs autres applications additionnelles deviennent actives.

Fig. 1

Fig. 2

EP 2 618 541 B1

Fig. 3

EP 2 618 541 B1

400

Distribute Token Parameters
to Respective Application
Token Buckets
401

Throttle the Respective Data
Received from the at least
Two Further Applications via
the Respective Application
Token Buckets
403

Fig. 4

250

122
T, R

b1,r1 →

b2,r2 →

b3,r3 →

252-1
b1,r1

252-2
b2,r2

252-3
b3,r3

252-n

Fig. 5

21

101

Interface
228

236  Processor
208

$W1=w1/(w1+w2+w3)$

$W2=w2/(w1+w2+w3)$

$W3=w3/(w1+w2+w3)$

$b1=w1*T, r1=w1*R$

$b2=w2*T, r2=w2*R$

$b3=w3*T, r3=w3*R$

Display
224

Input Device
200

Volatile
Storage
216

236  Non-volatile Storage
212

240  242-1 242-2 242-3 ... 242-n

250  252-1 252-2 252-3 ... 252-n

Fig. 6

Fig. 7

Fig. 8

EP 2 618 541 B1

Fig. 9

EP 2 618 541 B1

1000

| Day/Hr | 0 | 1 | 2 | ... | 23 |
|--------|------|------|-------|-----|--------|
| **Mon** | D0mon | D1mon | **D2mon** | ... | D23mon |
| **Tue** | D0tue | D1tue | D2tue | ... | D23tue |
| **Wed** | ... | ... | ... | ... | ... |
| **Thu** | ... | ... | ... | ... | ... |
| **Fri** | ... | ... | ... | ... | ... |
| **Sat** | ... | ... | ... | ... | ... |
| **Sun** | D0sun | D1sun | D2sun | | D23sun |

Fig. 10

1100

**Time Of Day Distribution factor "D" calculation**
1. Collect hourly usage data for communications application, third party application usage global population
2. Determine mean usage for sample period (week, month)
3. Set D=1 at mean usage value. Calculate D value for each hourly interval

Assumptions –    Sample Period Mean=0.80MB➜D=1
                 Calculated mean usage at hour "2Mon"=1.60MB

**D2Mon** = 1.60/0.80 = **2.0**

Fig. 11

EP 2 618 541 B1

Fig. 12

Fig. 13

101b

Interface 228b

Processor 208b

Input Device 200b

Display 224b

Volatile Storage 216b

Non-volatile Storage 212b

236b

240b 242b-1 242b-2 242b-3 ... 242b-n

250b 252b-1 252b-2 252b-3 ... 252b-n

**EP 2 618 541 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2008025214 A

- US 2011083175 A